# EUROPÄISCHE PATENTSCHRIFT

(11) **EP 1 174 597 B1**
(45) Veröffentlichungstag und Bekanntmachung des Hinweises auf die Patenterteilung: **20.04.2005**
(21) Anmeldenummer: 01116468.8
(22) Anmeldetag: 07.07.2001
(51) Int. Cl.: F01M 11/03

(54) **Baugruppe für eine Brennkraftmaschine mit einem Ölfilter**
Assembly for a combustion engine with an oilfilter
Ensemble pour un moteur à combustion avec un filtre à huile

(30) Priorität: 22.07.2000 DE 20012736 U
(43) Veröffentlichungstag der Anmeldung: 23.01.2002
(73) Patentinhaber: Mann + Hummel GmbH, 71638 Ludwigsburg (DE)
(72) Erfinder: Jainek, Herbert, 74074 Heilbronn (DE); Holch, Hans-Werner, 74081 Heilbronn (DE); Hartmann, Roland, 71711 Steinheim (DE)
(74) Vertreter: Voth, Gerhard, Dipl.-Ing.

(56) Entgegenhaltungen:
- EP-A- 0 612 549
- DE-A- 19 737 699
- DE-A- 19 961 579
- GB-A- 2 287 199

## Beschreibung

### Stand der Technik

Die Erfindung betrifft eine Baugruppe für eine Brennkraftmaschine, die zumindest einen Ölfilter und eine zweite Gehäusestruktur aufweist, nach der Gattung des Patentanspruches 1. Eine derartige Baugruppe ist z. B. aus der DE 94 11 212 bekannt. Es handelt sich hierbei um den Ölfilter einer Brennkraftmaschine, wobei die Gehäusestruktur durch das Gehäuse des Ölfilters gebildet wird und die zweite Struktur die Brennkraftmaschine selbst ist. Der Ölfilter ist mit einem auswechselbaren Filtereinsatz versehen. Da die Gehäusestruktur des Ölfilters waagerecht ausgerichtet ist, muss für einen tropffreien Ausbau des Filterelementes das im Gehäuse befindliche Restöl vor dem Auswechseln abgelassen werden. Hierzu ist eine gesonderte Ablassschraube im geodätisch tiefsten Bereich des Gehäuses vorgesehen, welche vor dem Filterausbau geöffnet wird.

Die Ablassschraube erzeugt sowohl einen erhöhten Aufwand bei der Fertigung und Montage des Filters als auch beim Auswechseln des Filtereinsatzes. Hierdurch verringert sich in nachteilhafter Weise die Wirtschaftlichkeit der vorgeschlagenen Lösung.

Aufgabe der Erfindung ist es daher, eine Baugruppe für eine Brennkraftmaschine mit einem Ölfilter, einem Ölablauf und einer zweiten Gehäusestruktur derart zu gestalten, dass diese einfach in der Funktion und kostengünstig in der Herstellung ist. Diese Aufgabe wird durch die Merkmale des Patentanspruches 1 gelöst.

### Vorteile der Erfindung

Die erfindungsgemäße Baugruppe weist eine erste und eine zweite Gehäusestruktur auf. Die Gehäusestrukturen sind zusammengefasst, wobei diese auch als Teil der Brennkraftmaschine ausgeführt sein können. Zum Beispiel kann die eine Gehäusestruktur durch die Ölauffangwanne der Brennkraftmaschine gebildet werden. In der ersten Gehäusestruktur ist der Ölfilter untergebracht, in der zweiten Gehäusestruktur ist zumindest eine Kanalstruktur untergebracht, die zur Durchleitung der im Ölkreislauf befindlichen Fluide geeignet ist. Die Fluide, die im Ölkreislauf auftreten, sind selbstverständlich das Schmieröl selbst, aber auch Kurbelgehäusegase, die aus den Brennräumen der Zylinder in das Kurbelgehäuse gelangen.

Erfindunsgemäß ist vorgesehen, dass der Ölablauf des Ölfilters und die Kanalstruktur, die in der zweiten Gehäusestruktur vorgesehen ist, ineinander münden, so dass ein gemeinsamer Leitungsabschnitt für die Kanalstrukturen entsteht. Hierdurch lässt sich die Komplexität der Gesamtkonstruktion verringern. Es entstehen einfachere Strukturen, die einerseits einen höheren Gestaltungspielraum bei der Konstruktion der Baugruppe schaffen, andererseits fertigungstechnisch einfacher herzustellen sind. Gerade Kanalstrukturen bewirken als Hohlräume einen zusätzlichen Aufwand an Bauteilen bzw. Fertigungsschritten. Dieser kann durch Vereinigung der Kanäle eingespart werden.

Eine Ausbildung der Erfindung sieht vor, dass die Kanalstruktur in der zweiten Gehäusestruktur durch eine Ablaufleitung für das Schmieröl an der Ölwanne der Brennkraftmaschine gebildet ist. Diese dient für einen Ölwechsel, bei dem das verbrauchte Schmieröl an einem möglichst tiefen Punkt der Brennkraftmaschine entnommen werden muss. Die Ablaufleitung kann z. B. durch ein Verschlussorgan, insbesondere eine Ablassschraube verschlossen sein. Bei einer entsprechenden Führung des Ablaufkanals des Ölfilters kann dieser gleichzeitig durch dieses Verschlussorgan verschlossen werden. Durch Öffnen des Verschlussorgans werden somit die Ablaufleitung für das Schmieröl aus der Ölauffangwanne und gleichzeitig aus dem Filtergehäuse freigegeben. Bei einem Ölwechsel entfällt daher ein zusätzlicher Schritt der Entleerung des Filtergehäuses vor einem Filterwechsel, der im allgemeinen zusammen mit dem Ölwechsel durchgeführt wird. Hierdurch wird auch Zeit bei einem Ölwechsel eingespart.

Eine andere Möglichkeit, die Ablaufleitung des Ölfilters zu verschließen, besteht in der Anordnung eines druckbetätigten Sperrventils. Dieses kann z. B. aus einer Ventilplatte bestehen, die wie eine Blattfeder wirkt. Sobald auf der Druckseite des Ölfilters ein Öldruck aufgebaut wird, schließt dieses Sperrventil, so dass kein Kurzschluss zur Ölwanne entsteht. Bei einem Ölwechsel befindet sich der Ölkreislauf jedoch in einem drucklosen Zustand, so dass das Sperrventil geöffnet ist. Sobald das Öl aus der Ölauffangwanne abgelassen wird, entleert sich somit auch das Filtergehäuse. Das beschriebene Sperrventil lässt sich auf einfache Weise herstellen und erhöht des Gestaltungspielraum bei der Konstruktion der verschiedenen Ablaufkanäle.

Eine andere Ausgestaltung der Erfindung sieht vor, dass die Kanalstruktur durch einen Eintrittskanal für die Durchleitung von Kurbelgehäusegasen gebildet ist. Dieser Eintrittskanal verbindet das Kurbelgehäuse mit einem Ölabscheider, wo diese gereinigt werden und in die Umgebung bzw. den Ansaugtrakt der Brennkraftmaschine gelangen können. Dieser Kanal kann gleichzeitig genutzt werden, um eine Rückleitung der Ölreste aus dem Gehäuse des Ölfilters zu gewährleisten. Der gemeinsame Leitungsabschnitt vom Einleitungskanal für Kurbelgehäusegase und vom Ölablauf des Filters erstreckt sich dann von der Zusammenführung der beiden Leitungen bis zum Kurbelgehäuse. Die Baugruppe besteht daher sinnvollerweise aus dem Ölfilter und dem Ölabscheider für Kurbelgehäusegase und kann modulartig aufgebaut sein. Insgesamt werden dadurch Kosten in der Montage der Baugruppe sowie bei deren Herstellung eingespart.

Eine andere Möglichkeit der Integration des Ölablaufs des Filters besteht in einer Zusammenführung mit dem Rücklaufkanal des Ölabscheiders, welcher für das aus den Kurbelgehäusegasen abgeschiedene Öl vorgesehen ist. Hierdurch lassen sich im wesentlichen die bereits beschriebenen Vorteile erzielen. Selbstverständlich kann der Rücklaufkanal und der Eintrittskanal des Ölabscheiders ebenfalls durch eine Kanalstruktur gebildet sein. Hierdurch ist eine weitere Steigerung des Integrationsgrades der Baugruppe möglich, wodurch die Wirtschaftlichkeit der Lösung gesteigert wird.

Durch die Integration von Ölabscheider und Ölfilter in einem Modul kann insbesondere auch Einbauraum gespart werden. Dieser Vorteil lässt sich insbesondere dann nutzen, wenn der Ölabscheider und/oder der Ölfilter einen länglichen oder ovalen Querschnitt aufweist. Hierdurch lässt sich dieser stärker an das zugehörige Filtergehäuse des Moduls anpassen wodurch die Baubreite vermindert wird.

Durch den vorgesehenen Ölablauf im Ölfilter ist insbesondere auch eine schräge oder waagerechte Anordnung des Filtergehäuses bezüglich der Achse des Filtereinsatzes möglich. Die hierdurch entstehenden Volumina, die nicht durch den regulären Ölauslass des Filtergehäuses entleert werden können, werden bei einem Filterwechsel automatisch durch den Ölablauf entleert. Ein tropffreier Ausbau des Filtereinsatzes ist somit unabhängig von dessen Einbaulage möglich. Dies erzeugt einen vergrößerten Gestaltungsspielraum bei der Anordnung des Filters im Motorraum der Brennkraftmaschine.

### Zeichnung

Weitere Einzelheiten der Erfindung werden in den Zeichnungen an Hand von schematischen Ausführungsbeispielen beschrieben. Hierbei zeigen
- Figur 1: ein Modul, bestehend aus Ölabscheider und Ölfilter in der Seitenansicht,
- Figur 2: den Schnitt A - A gemäß Figur 1,
- Figur 3: einen horizontal eingebauten Ölfilter an der Ölwanne einer Brennkraftmaschine im Schnitt und
- Figur 4: ein Detail gemäß Figur 3 mit modifiziertem Ölablauf.

### Beschreibung der Ausführungsbeispiele

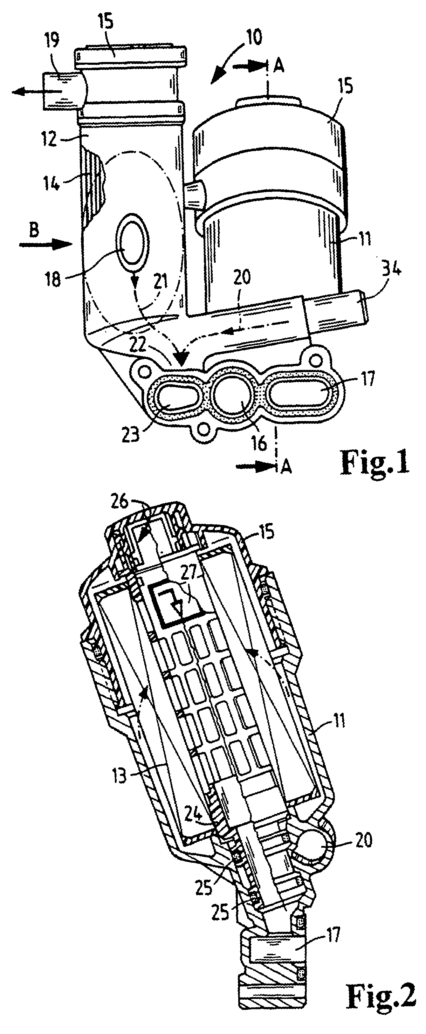

In Figur 1 ist ein Modul 10, bestehend aus einer ersten Gehäusestruktur 11 als Ölfilter und einer zweiten Gehäusestruktur 12 als Ölabscheider dargestellt. Die erste Gehäusestruktur ist mit einem Filterelement 13 (vergl. Figur 2) und die zweite Gehäusestruktur 12 mit einem Abscheideeinsatz 14 versehen. Die Einsätze können ausgewechselt werden, indem die Deckel 15 von den Gehäusestrukturen 11, 12 abgeschraubt werden. Der Ölfilter ist mit einem Öleinlass 16 und einem Ölauslass 17 ausgestattet. Der Ölabscheider weist einen Eintrittskanal 18 für Kurbelgehäusegase aus dem Kurbenwellengehäuse und einen Kurbelgehäusegasauslass 19 auf. Ein weiterer Anschluss 34 für Kurbelgehäuse aus dem Zylinderkopf ist an einem Ölablauf 20 angeschlossen.

Durch gestrichelte Pfeile angedeutet ist der Verlauf des Ölablaufes 20, der aus der ersten Gehäusestruktur herausführt, und eines Rücklaufkanals 21 für das im Ölabscheider abgeschiedene Öl, der aus der zweiten Gehäusestruktur herausführt. Diese münden beide in einen gemeinsamen Leitungsabschnitt 22, der zu einer Anschlussöffnung 23 am Modul führt.

Die zweite Gehäusestruktur 12 mit dem Abscheideeinsatz 14 ist oval ausgeführt. In der dargestellten Ansicht lässt sich die Schmalseite der Gehäusestruktur erkennen. Die ebenfalls in Figur 1 eingezeichnete Blickrichtung B deutet diejenige Blickrichtung an, in der die zweite Gehäusestruktur in ihrer breitesten Abmessung zu erkennen ist (strichpunktierte Linie).

In Figur 2 ist der Aufbau der ersten Gehäusestruktur 11 mit dem Filterelement 13 zu erkennen. Die Gehäusestruktur 11 ist durch den abgedichteten Schraubdeckel 15 verschlossen. Im Inneren der Gehäusestruktur ist das Filterelement auf ein Mittelrohr 24 gesteckt, welches gleichzeitig über O-Ringe 25 den Ölablauf 20 abdichtet. Durch Aufschrauben des Deckels 15 wird über eine Schnappverbindung 26 das Mittelrohr 24 mitgenommen, so dass der Ölablauf 20 geöffnet wird. Das Mittelrohr stellt gleichzeitig die Reinseite des Filters dar, wobei dessen Innenraum mit dem Ölauslass 17 verbunden ist. Im Mittelrohr ist weiterhin schematisch dargestellt ein Umgehungsventil 27 untergebracht.

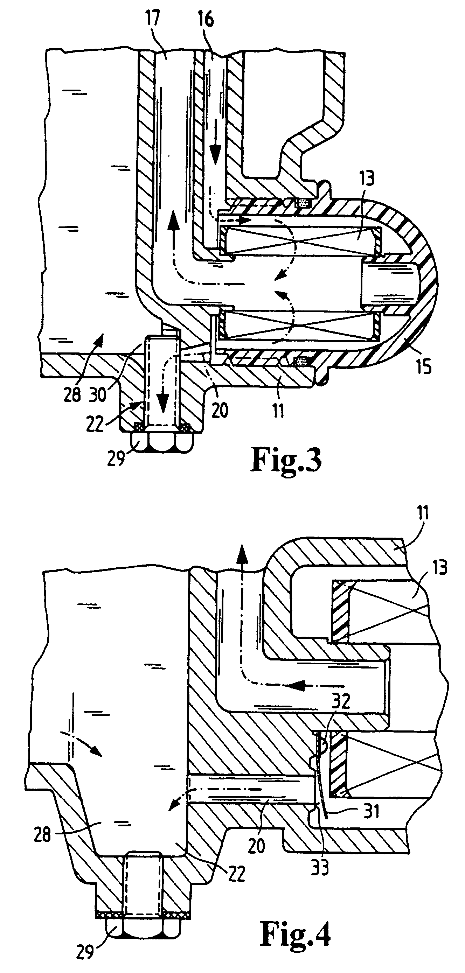

Die Figur 3 zeigt einen Schnitt durch ein horizontal eingebautes Filterelement 13. An einer Ölwanne 28, die als zweite Gehäusestruktur aufgefasst werden kann, ist als erste Gehäusestruktur 11, welches als Teil der Ölwanne ausgeführt ist, eine Aufnahme für das Filterelement vorgesehen. Diese wird durch den abgedichteten Deckel 15 verschlossen, wodurch das Filterelement in der Einbaulage gehalten wird. Die erste Gehäusestruktur weist einen Öleinlass 16 und einen Ölauslass 17 auf. Der Ölablauf 20 wird durch eine als Verschlussorgan 29 wirkende Schraube verschlossen, die gleichzeitig eine Ablaufleitung 30 für einen Ölwechsel verschließt. Damit münden Ölablauf 20 und Ablaufleitung 30 in den gemeinsamen Leitungsabschnitt 22. Durch Aufschrauben des Verschlussorgans 29 kann also sowohl das Öl aus der Ölwanne als auch das Restöl aus der Gehäusestruktur 11 ausfließen.

In Figur 4 wird das Verschlussorgan 29 lediglich für die Ölwanne 28 verwendet. Der Ölablauf 20 wird durch ein Sperrventil 31 verschlossen, welches aus einer federnden Platte besteht. Diese Platte ist an Hand einer Niete 32 im Aluminiumdruckgussgehäuse befestigt. Im drucklosen Zustand des Ölkreislaufs ist das Sperrventil nicht verschlossen. Baut sich in der Gehäusestruktur 11 ein Druck auf, so wird durch diesen die Platte des Sperrventils gegen einen Ventilsitz 33 gedrückt. wodurch das Ventil verschlossen und ein Kurzschluss des zu reinigenden Schmieröls mit der Ölwanne verhindert wird. Für einen Ölwechsel ist das Ölsystem drucklos und das Sperrventil daher geöffnet. Es genügt also zum Entfernen des Öls aus der Ölwanne 28 und der Gehäusestruktur 11 ein Öffnen des Verschlussorgans 29.

## Patentansprüche

1. Baugruppe für eine Brennkraftmaschine, aufweisend zumindest
- einen Ölfilter mit einer ersten Gehäusestruktur (11), in die ein auswechselbares Filterelement (13) derart eingebaut ist, dass es vom Schmieröl der Brennkraftmaschine durchströmbar ist, und mit einem Ölablauf (20), der bei Ausbau des Filterelementes (13) freigegeben werden kann,
- eine zweite Gehäusestruktur (12), die eine Kanalstruktur (18, 21, 30) zur Durchleitung der im Ölkreislauf befindlichen Fluide aufweist,
**dadurch gekennzeichnet, dass** der Ölablauf (20) und die Kanalstruktur (18, 21, 30) ineinander münden, wodurch diese einen gemeinsamen Leitungsabschnitt (22) aufweisen.

2. Baugruppe nach Anspruch 1, **dadurch gekennzeichnet, dass** die Kanalstruktur in der zweiten Gehäusestruktur durch eine Ablaufleitung (30) für das Schmieröl an einer Ölwanne (28) der Brennkraftmaschine gebildet ist.

3. Baugruppe nach einem der vorherigen Ansprüche, **dadurch gekennzeichnet, dass** der gemeinsame Leitungsabschnitt (22) ein Verschlussorgan (29) aufweist, welches sowohl die Ablaufleitung (30) als auch den Ölablauf (20) verschließt.

4. Baugruppe nach einem der Ansprüche 1 bis 2, **dadurch gekennzeichnet, dass** der Ölablauf (20) mit einem druckbetätigten Sperrventil (31) versehen ist, welches im drucklosen Zustand geöffnet ist.

5. Baugruppe nach Anspruch 1, **dadurch gekennzeichnet, dass** die Kanalstruktur in der zweiten Gehäusestruktur durch einen Eintrittskanal (18) für die Durchleitung von Kurbelgehäusegasen von einem Kurbelgehäuse der Brennkraftmaschine zu einem Ölabscheider gebildet ist.

6. Baugruppe nach Anspruch 1, **dadurch gekennzeichnet, dass** die Kanalstruktur in der zweiten Gehäusestruktur durch einen Rücklaufkanal (21) für das aus den Kurbelgehäusegasen abgeschiedene Öl vom Ölabscheider zum Kurbelgehäuse der Brennkraftmaschine gebildet ist.

7. Baugruppe nach Anspruch 5 oder 6, **dadurch gekennzeichnet, dass** die Kanalstruktur gleichzeitig als Rücklaufkanal (21) und als Eintrittskanal (18) ausgebildet ist.

8. Baugruppe nach einem der Ansprüche 5 bis 7, **dadurch gekennzeichnet, dass** der Ölabscheider und der Ölfilter zu einem Modul (10) zusammengefasst sind, welches an der Brennkraftmaschine montierbar ist.

9. Baugruppe nach einem der Ansprüche 5 bis 8, **dadurch gekennzeichnet, dass** der Ölabscheider und/oder der Ölfilter einen länglichen oder ovalen Querschnitt aufweist, und dass in diesen ein diese Querschnittsform ausfüllender Abscheideeinsatz (14) eingebaut ist.

10. Baugruppe nach einem der vorherigen Ansprüche, **dadurch gekennzeichnet, dass** das Filterelement (13) bezüglich der Richtung der Schwerkraft waagerecht oder schräg in die erste Gehäusestruktur (11) eingebaut ist.

## Claims

1. Assembly for an internal combustion engine, said assembly including at least
- one oil filter with a first housing structure (11), into which a replaceable filter element (13) is disposed in such a manner that said filter element is traversable by the lubricating oil of the internal combustion engine, and with an oil outlet (20), which can be accessed when the filter element (13) is removed,
- a second housing structure (12), which includes a duct structure (18, 21, 30) for conducting the fluid situated in the oil circulation,
**characterised in that** the oil outlet (20) and the duct structure (18, 21, 30) merge into each other, they thereby having a common pipe portion (22).

2. Assembly according to claim 1, **characterised in that** the duct structure in the second housing structure is formed by an outlet pipe (30) for the lubricating oil on an oil sump (28) of the internal combustion engine.

3. Assembly according to one of the previous claims, **characterised in that** the common pipe portion (22) includes a closing member (29), which closes both the outlet pipe (30) and the oil outlet (20).

4. Assembly according to one of claims 1 to 2, **characterised in that** the oil outlet (20) is provided with a pressure-actuated non-retum valve (31 ), which is open in the non-pressurised condition.

5. Assembly according to claim 1, **characterised in that** the duct structure in the second housing structure is formed by an inlet duct (18) for the conducting of crankcase gases from a crankcase of the internal combustion engine to an oil separating means.

6. Assembly according to claim 1, **characterised in that** the duct structure in the second housing structure is formed by a return duct (21) for the oil separated from the crankcase gases from the oil separating means to the crankcase of the internal combustion engine.

7. Assembly according to claim 5 or 6, **characterised in that** the duct structure is at the same time return duct (21) and inlet duct (18).

8. Assembly according to one of claims 5 to 7, **characterised in that** the oil separating means and the oil filter are assembled together to form one module (10), which is mountable on the internal combustion engine.

9. Assembly according to one of claims 5 to 8, **characterised in that** the oil separating means and/or the oil filter has a longitudinal or oval cross-section, and **in that** a separating insert (14) is installed in these latter filling out this cross-sectional shape.

10. Assembly according to one of the previous claims, **characterised in that** the filter element (13) is installed into the first housing structure (11) horizontally or inclinedly with reference to the direction of the force of gravity.

## Revendications

1. Module pour un moteur à combustion interne comprenant au moins
- un filtre à huile avec une première structure de boîtier (11) dans laquelle un élément filtrant (13) est installé de manière à pouvoir être traversé par l'huile de graissage du moteur à combustion interne, et avec une évacuation d'huile (20) pouvant être libérée lors du démontage de l'élément filtrant (13),
- une seconde structure de boîtier (12) qui présente une structure à canaux (18, 21, 30) pour le passage des fluides présents dans le circuit d'huile,
**caractérisé en ce que**
l'évacuation d'huile (20) et la structure à canaux (18, 21, 30) débouchent l'une dans l'autre de telle sorte qu'elles présentent un segment de conduite (22) commun.

2. Module selon la revendication 1,
**caractérisé en ce que**
la structure à canaux dans la seconde structure de boîtier est formée par une conduite d'évacuation (30) pour l'huile de graissage au niveau d'un bac à huile (28) du moteur à combustion interne.

3. Module selon l'une quelconque des revendications précédentes,
**caractérisé en ce que**
le segment de conduite (22) commun présente un organe d'obturation (29) qui ferme aussi bien la conduite d'évacuation (30) que l'évacuation d'huile (20).

4. Module selon l'une quelconque des revendications 1 à 2,
**caractérisé en ce que**
l'évacuation d'huile (20) est munie d'un clapet anti-retour (31) actionné par pression, ouvert à l'état sans pression.

5. Module selon la revendication 1,
**caractérisé en ce que**
la structure à canaux dans la seconde structure de boîtier est formée par un canal d'entrée (18) pour le passage des gaz depuis un carter de vilebrequin du moteur à combustion interne vers un séparateur d'huile.

6. Module selon la revendication 1,
**caractérisé en ce que**
la structure à canaux dans la seconde structure de boîtier est formée par un canal de retour (21) pour l'huile séparée des gaz de carter de vilebrequin depuis le séparateur d'huile vers le carter de vilebrequin du moteur à combustion interne.

7. Module selon la revendication 5 ou 6,
**caractérisé en ce que**
la structure à canaux est configurée en même temps comme canal de retour (21) et canal d'entrée (18).

8. Module selon l'une quelconque des revendications 5 à 7,
**caractérisé en ce que**
le séparateur d'huile et le filtre à huile sont regroupés en un module (10) pouvant être monté sur le moteur à combustion interne.

9. Module selon l'une quelconque des revendications 5 à 8,
**caractérisé en ce que**
le séparateur d'huile et/ou le filtre à huile présente une section transversale allongée ou ovale, et dans celle-ci est installé un élément séparateur (14) remplissant la forme de la section transversale.

10. Module selon l'une quelconque des revendications précédentes,
**caractérisé en ce que**
l'élément filtrant (13) est installé dans la première structure de boîtier (11) de manière horizontale ou inclinée par rapport à la direction de la force de gravité.
